# FASCICULE DE BREVET EUROPEEN

(11) **EP 2 820 083 B1**
(45) Date de publication et mention de la délivrance du brevet: **24.10.2018**
(21) Numéro de dépôt: 13712851.8
(22) Date de dépôt: 26.02.2013
(51) Int. Cl.: C08L 27/16, B32B 1/08, F16L 11/08

(54) **STRUCTURE TUBULAIRE FLEXIBLE D'EXPLOITATION PETROLIERE A HAUTE TENUE**
HOCHBELASTBARE FLEXIBELE ROHRSTRUKTUR FÜR DIE ERDÖLGEWINNUNG
HIGHLY RESISTANT FLEXIBLE TUBULAR STRUCTURE FOR CRUDE OIL EXTRACTION

(30) Priorité: 01.03.2012 FR 1251910
(43) Date de publication de la demande: 07.01.2015
(73) Titulaire: Technip France, 92400 Courbevoie (FR)
(72) Inventeur: CHALUMEAU, Alain, F-76960 Notre-Dame-de-Bondeville (FR)
(74) Mandataire: Gendron, Vincent Christian
(86) Numéro de dépôt international: PCT/FR2013/050391
(87) Numéro de publication internationale: WO 2013/128110

(56) Documents cités:
- EP-A1- 0 608 939
- EP-A1- 1 342 752
- WO-A1-03/062691
- FR-A1- 2 877 009
- US-A- 5 601 893
- PIANCA M ET AL: "Composition and sequence distribution of vinylidene fluoride copolymer and terpolymer fluoroelastomers. Determination by <19>F nuclear magnetic resonance spectroscopy and correlation with some properties", POLYMER, ELSEVIER SCIENCE PUBLISHERS B.V, GB, vol. 28, no. 2, 1 février 1987 (1987-02-01), pages 224-230, XP024118462, ISSN: 0032-3861, DOI: 10.1016/0032-3861(87)90408-3 [extrait le 1987-02-01]

## Description

La présente invention se rapporte à une structure tubulaire flexible d'exploitation pétrolière comportant une couche de renfort et une couche d'un composé polymérique fluoré.

Un domaine d'application envisagé est notamment celui du transport des fluides pour l'exploitation pétrolière sous-marine, ou « *offshore* » en langue anglaise, et terrestre, « *onshore* » en langue anglaise.

Le terme « *structure tubulaire flexible* » désigne à la fois les conduites flexibles sous-marines ou terrestres utilisées pour l'exploitation pétrolière ou gazière, les ombilicaux sous-marins et les structures combinant les fonctions des conduites flexibles et des ombilicaux sous-marins.

Les conduites flexibles sous-marines servent essentiellement à transporter le pétrole ou le gaz extrait d'un gisement offshore. Elles peuvent aussi être utilisées pour transporter de l'eau de mer pressurisée destinée à être injectée dans le gisement afin d'augmenter la production en hydrocarbures.

Ces conduites flexibles sont formées d'un ensemble de couches différentes destinées chacune à permettre à la conduite de supporter les contraintes de service ou d'installation offshore. Ces couches comprennent notamment des gaines polymériques et des couches de renfort formées par des enroulements de fils de forme métalliques, de feuillards ou de fils en matériau composite.

Les conduites tubulaires flexibles comprennent généralement, de l'intérieur vers l'extérieur, au moins un tube d'étanchéité interne destiné à véhiculer le fluide transporté, des couches de renforts autour du tube d'étanchéité interne, et une gaine de protection externe autour des couches de renfort. Le tube d'étanchéité interne est généralement constitué d'un matériau polymérique et il est désigné indifféremment sous le terme « gaine interne d'étanchéité » ou « gaine de pression ».

De telles conduites flexibles sont décrites dans les documents normatifs publiés par l'American Petroleum Institute (API), API 17J « Spécification for Unbonded Flexible Pipe » et API RP 17B « Recommended Practice for Flexible Pipe ».

Les conduites flexibles terrestres visées par la présente invention sont principalement celles utilisées pour le forage et le contrôle des puits, notamment les conduites d'évacuation (« choke lines » en langue anglaise) et d'obturation (« kill lines » en langue anglaise) décrites dans le document normatif API 16C « Choke and Kill Systems » publié par l'American Petroleum Institute. Ces conduites de sécurité, qui sont reliées aux dispositifs d'obturation et de contrôle des têtes de puits, doivent pouvoir résister à des conditions extrêmes de pression et de température, typiquement 1000 bar et 130°C. Elles présentent généralement une structure similaire à celle des conduites flexibles sous-marines.

L'invention vise aussi les conduites flexibles terrestres décrites dans le document normatif API RP 15S «Qualification of Spoolable Reinforced Plastic Line Pipe » publié par l'American Petroleum Institute. Ces conduites flexibles onshore sont connues de l'homme du métier sous le nom anglais « Reinforced Thermoplastic Pipe ». Elles sont utilisées pour transporter du pétrole et du gaz sous pression, typiquement jusqu'à 150 bar. Leur structure est similaire à celle des conduites flexibles sous-marines.

Les ombilicaux sous-marins servent principalement à transporter des fluides, de la puissance et des signaux à des équipements sous-marins, du type par exemple vannes, têtes de puits, collecteurs, pompes ou séparateurs, en vue d'alimenter en puissance et de contrôler et commander à distance les actionneurs de ces équipements. Les fluides transportés pour ces applications sont généralement des huiles de commande hydraulique. Les ombilicaux sous-marins peuvent aussi servir à transporter divers fluides destinés à être injectés à l'intérieur d'une conduite principale de transport d'hydrocarbure, en vue soit de faciliter l'écoulement dudit hydrocarbure, par exemple par injection d'agents chimiques visant à prévenir la formation de bouchons d'hydrates ou de méthane facilitant la remontée du pétrole vers la surface (méthode « gas lift »), soit d'assurer la maintenance de ladite conduite principale, par exemple par injection d'inhibiteurs de corrosion.

Un ombilical sous-marin consiste en un assemblage de une ou plusieurs conduites étanches, et optionnellement, de câbles électriques et/ou de câbles à fibre optique, ledit assemblage étant réalisé par enroulement hélicoïdal ou en S/Z desdits tubes et câbles, de telle sorte que l'ombilical soit flexible, ledit assemblage pouvant être entouré de couches de renfort et d'une gaine polymérique de protection externe. Ces conduites étanches, qui ont pour fonction le transport des fluides précités, ont généralement un diamètre très inférieur au diamètre externe de l'ombilical. Une conduite étanche d'ombilical consiste généralement soit en un simple tube métallique inoxydable, soit en une conduite flexible renforcée comportant un tube polymérique étanche entouré d'une ou plusieurs couches de renfort.

De tels ombilicaux sous-marins sont décrits dans le document normatif API 17E « Spécification for Subsea Umbilicals » publiés par l'American Petroleum Institute, ainsi que dans la norme ISO 13628-5.

Le document US 6 102 077 divulgue une structure tubulaire flexible combinant les fonctions d'une conduite flexible sous-marine et d'un ombilical sous-marin. Cette structure comprend en son centre une conduite flexible de fort diamètre utilisée pour transporter des hydrocarbures, ladite conduite flexible centrale étant entourée par une pluralité de conduites périphériques de petit diamètre assemblés hélicoïdalement ou en S/Z autour de la conduite flexible centrale, lesdites conduites périphériques étant utilisés pour des fonctions similaires à celles des ombilicaux, notamment des commandes hydrauliques ou de l'injection de fluides. De telles structures tubulaires flexibles sont connues de l'homme du métier sous les noms « Integrated Subsea Umbilical » et « Integrated Production Bundle ». Ces structures de fort diamètre sont généralement entourées d'une gaine externe polymérique.

Le document EP 0608939 décrit des compositions polymériques à base de polymères fluorés permettant de fournir des composés polymériques fluorés pour produire des structures tubulaires flexibles d'exploitation pétrolière. Ces structures tubulaires comprennent au moins une couche de renfort et au moins une couche d'un composé polymérique fluoré. Les compositions comprennent, en poids, de 60 à 80 % de PVDF, de 20 à 40 % d'un copolymère thermoplastique de VDF et d'un autre comonomère fluoré (présent à hauteur de 5 à 25 % dans le copolymère), et de 5 à 20 % d'un plastifiant (par rapport à la somme du PVDF et du copolymère). Parmi les copolymères thermoplastiques envisagés figurent des copolymères VDF/HFP. Les teneurs en HFP indiquées dans les copolymères qui sont divulgués dans les exemples sont de l'ordre de 10 %. Le document EP 1 342 752 A1 décrit une composition comprenant un homopolymère de polyfluore de vinylidène et un copolymère de fluorure de vinylidène et d'un comonomère fluoré selon une proportion massique maximale de 9% de ce dernier.

Cependant, les composés polymériques fluorés des structures tubulaires réalisés avec de telles compositions ne donnent pas entièrement satisfaction. En particulier, lorsque les structures sont soumises à des mouvements répétés dus aux courants marins, la tenue à la fatigue de ces composés polymériques fluorés est jugée insuffisante. Au surplus, lorsque ces structures tubulaires sont étendues à grande profondeur où la température est basse, mais où le fluide qui les traverse est à une relativement haute température, la durée de vie de ces conduites n'est pas suffisante.

Aussi, un problème qui se pose et que vise à résoudre la présente invention est de fournir une structure tubulaire flexible pour l'exploitation pétrolière comprenant un composé polymérique fluoré présentant non seulement des propriétés mécaniques, thermiques et chimiques améliorées, mais aussi des propriétés qui n'évoluent pas au cours de la vie de la conduite en service.

Dans ce but, la présente invention propose une structure tubulaire flexible d'exploitation pétrolière, ladite structure tubulaire flexible comprenant au moins une couche de renfort et au moins une couche d'un composé polymérique fluoré, ledit composé polymérique fluoré présentant une composition comprenant d'une part un homopolymère de polyfluorure de vinylidène et un copolymère de fluorure de vinylidène et d'un comonomère fluoré et d'autre part un plastifiant ; selon invention, la proportion massique en comonomère fluoré dans le copolymère est supérieure à 25 %.

Ainsi, une caractéristique de l'invention réside dans la mise en oeuvre d'un copolymère dont la proportion massique en comonomère fluoré est supérieure à 25 %. Préférentiellement, ledit comonomère fluoré est choisi parmi : l'hexafluoropropylène (HFP), le perfluoro(méthylvinyl)éther (PMVE), le perfluoro(éthylvinyl)éther (PEVE), le perfluoro(propylvinyl)éther (PPVE), le tétrafluoroéthylène (TFE) ou encore le perfluorobutyléthylène (PFBE), le chlorotrifluoroéthylène (CTFE), le fluoroethylènepropylène (FEP) ou le trifluoroéthylène.

De plus le copolymère peut également être un terpolymère.

Selon un mode de mise en oeuvre préféré, le comonomère fluoré est l'hexafluoropropylène.

De la sorte, le copolymère présente des propriétés élastomériques qu'il confère au composé polymérique fluoré et qui permet non seulement d'augmenter la tenue en fatigue dudit composée, mais aussi d'améliorer la tenue à froid. En outre, la durée de vie des structures tubulaires flexibles ainsi obtenue est augmentée.

C'est là une différence essentielle avec l'objet du document EP 0608939, où précisément, il est recherché des compositions aptes à former des composés polymériques fluorés non élastomériques.

Selon un mode de mise en oeuvre de l'invention particulièrement avantageux, ledit copolymère de fluorure de vinylidène et dudit comonomère fluoré est présent dans ladite composition selon une proportion massique de 10 à 35 %. De la sorte, ledit copolymère est un élastomère, et il peut conférer au composé polymérique fluoré des propriétés élastomériques plus encore prononcées, et partant, permettre de réaliser une structure tubulaire flexible présentant une durée de vie encore améliorée.

Préférentiellement, ledit copolymère de fluorure de vinylidène et dudit comonomère fluoré est présent dans ladite composition selon une proportion massique de 20 à 35 %, et par exemple comprise entre 25% et 35 %.

Selon un autre mode de mise en oeuvre d'invention, ledit plastifiant est choisi parmi le sébaçate de dibutyle, le phtalate de dioctyle, le N-n-butylsulfonamide, les polyesters polymériques et les combinaisons de ceux-ci, et, par exemple, le plastifiant est du sébaçate de dibutyle. Cet ensemble de plastifiants présente une moindre exsudation que les autres vis-à-vis de la masse plastique du composé. Ledit plastifiant est, avantageusement, présent dans ladite composition selon une proportion massique de 1 à 5 %, par exemple de 2 à 3,5 %.

En outre, et selon une caractéristique de l'invention particulièrement avantageuse, la proportion massique dudit comonomère fluoré dans ledit copolymère est : supérieure ou égale à 26 %, et / ou inférieure ou égale à 40 %, de préférence inférieure ou égale à 37%. De la sorte, on évite le fluage à chaud du composé dans les éléments métalliques de la couche de renfort.

De plus, ledit composé polymérique fluoré de la structure tubulaire flexible présente, préférentiellement, une tenue à la fatigue à l'état non vieilli supérieure ou égale à 50000 cycles, de préférence supérieure ou égale à 100000 cycles en moyenne et / ou une tenue à la fatigue à l'état vieilli un mois à 150°C dans l'air supérieure ou égale à 5000 cycles, de préférence supérieure ou égale à 8000 cycles en moyenne. Aussi, la tenue en fatigue du composé polymérique fluoré étant améliorée, la structure tubulaire flexible conserve toutes ses propriétés, chimiques, thermiques et mécaniques sur une plus longue période.

Selon une autre caractéristique de l'invention particulièrement avantageuse, ladite composition polymérique fluorée consiste en, ledit homopolymère de polyfluorure de vinylidène, ledit copolymère de fluorure de vinylidène et dudit comonomère fluoré et ledit plastifiant. Ainsi, la composition polymérique comprend exclusivement ces éléments qui lui confèrent les propriétés requises.

Au surplus, selon une première variante d'exécution de l'invention, ladite couche dudit composé polymérique fluoré forme une gaine de pression, tandis que ladite couche de renfort comprend des profilés enroulés en hélice autour de ladite gaine de pression. Selon une deuxième variante d'exécution de l'invention, ladite couche dudit composé polymérique fluoré est formée de bandes dudit composé polymérique fluoré enroulées en hélice. Aussi, selon un premier mode de réalisation conformément à cette deuxième variante, la structure tubulaire flexible comprend, avantageusement, deux couches de renfort, tandis que lesdites bandes de dudit composé polymérique fluoré sont enroulées en hélice entre lesdites deux couches de renfort. Selon un second mode de réalisation, elle comprend une gaine de pression et une carcasse métallique située à l'intérieur de ladite gaine de pression, tandis que lesdites bandes dudit composé polymérique fluoré sont enroulées en hélice entre ladite carcasse et ladite gaine de pression.

Selon une variante de l'invention, la structure tubulaire flexible de l'invention comporte plusieurs couches polymériques adjacentes dont au moins une est formée par la couche de composé polymérique fluoré présentant une composition comprenant d'une part un homopolymère de polyfluorure de vinylidène et un copolymère de fluorure de vinylidène et d'hexafluoropropylène et d'autre part un plastifiant ; la proportion massique en monomère hexafluoropropylène dans le copolymère étant supérieure à 25 %.

Selon un autre aspect, la présente invention concerne une méthode de fabrication d'une structure tubulaire flexible d'exploitation pétrolière, ladite méthode étant du type selon laquelle, on fournit une composition comprenant d'une part un homopolymère de polyfluorure de vinylidène et un copolymère de fluorure de vinylidène et d'un comonomère fluoré et d'autre part un plastifiant, et on forme une couche de renfort et une couche dudit composé polymérique fluoré pour associer lesdites couches ; selon invention, on fournit une composition dont la proportion massique en monomère en comonomère fluoré dans le copolymère est supérieure à 25 %. De préférence, le comonomère fluoré est l'hexafluoropropylène.

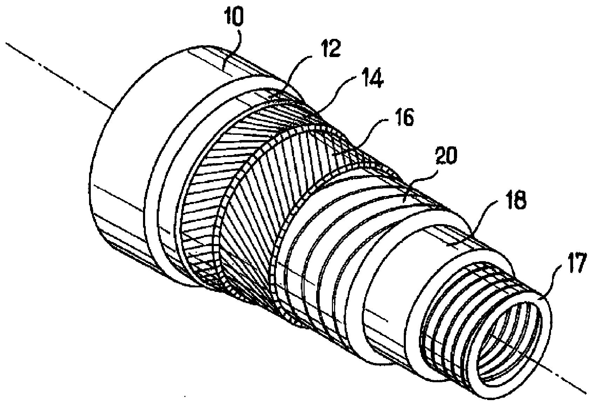

D'autres particularités et avantages de l'invention ressortiront à la lecture de la description faite ci-après de modes de réalisation particuliers de l'invention, donnés à titre indicatif mais non limitatif, en référence à l'unique dessin annexé sur lequel :
- l'unique Figure est une vue schématique partielle en perspective d'une structure flexible conforme à l'invention.

La Figure unique illustre un type de structure tubulaire flexible conforme à l'invention. Cette structure est celle d'une conduite destinée précisément au transport des hydrocarbures en milieu marin. Elle comprend, de l'extérieur vers l'intérieur, une gaine externe de protection 10, appelée gaine externe; une couche de maintien 12 enroulée autour d'une nappe externe d'armures de traction 14, une nappe interne d'armures de traction 16 enroulée en sens opposé de la nappe externe 14, une voûte de pression 20 de reprise des efforts radiaux généré par la pression du fluide transporté, une gaine polymérique interne d'étanchéité 18 et une carcasse interne 17 de reprise des efforts radiaux d'écrasement. Du fait de la présence de la carcasse interne 17, cette conduite est dite à passage non lisse, ou « *rough bore* » en langue anglaise.

La gaine polymérique interne d'étanchéité 18 ou gaine de pression est destinée à véhiculer à l'intérieur l'hydrocarbure et ce, de manière étanche. Cette gaine de pression 18 est donc entourée d'une voûte de pression 20 formée d'un enroulement à pas court d'un fil de forme métallique agrafé et destiné à reprendre les efforts de pression interne avec la gaine de pression 18. Les nappes d'armures de traction 14, 16 sont enroulées à pas long et elles sont destinées à reprendre les efforts longitudinaux de traction auxquels est soumise la conduite.

Selon l'invention, la structure tubulaire flexible comporte au moins une couche de renfort et une couche de composé polymérique fluoré présentant une composition comprenant d'une part un homopolymère de polyfluorure de vinylidène (PVDF) et un copolymère de fluorure de vinylidène (VDF) et d'hexafluoropropylène (HFP) et d'autre part un plastifiant ; la proportion massique en monomère hexafluoropropylène dans le copolymère étant supérieure à 25 %.

Cette gaine de pression de la structure tubulaire flexible peut être adjacente à d'autres couches polymériques qui peuvent être réalisées dans des polymères tels que le polyamide (PA), le polyéthylène (PE) ou un polyfluorure de vinylidène (PVDF) éventuellement chargés.

Selon une variante, ladite couche dudit composé polymérique fluoré forme une gaine intermédiaire de protection. Ainsi, la couche de composé polymérique fluoré de la structure tubulaire flexible de l'invention n'est pas la gaine interne d'étanchéité mais une autre gaine de la structure telle que par exemple une gaine intermédiaire ou une gaine sacrificielle. Une gaine sacrificielle est une gaine située sous une gaine d'étanchéité et qui protège l'intégrité de ladite gaine d'étanchéité pendant la fabrication et/ou pendant le fonctionnement en service de la structure tubulaire flexible.

Selon un mode de réalisation préféré de l'invention, c'est la gaine de pression 18 de la structure tubulaire flexible qui est la couche de composé polymérique fluorée présentant une composition comprenant d'une part un homopolymère de polyfluorure de vinylidène (PVDF) et un copolymère de fluorure de vinylidène (VDF) et d'hexafluoropropylène (HFP) et d'autre part un plastifiant ; la proportion massique en monomère hexafluoropropylène dans le copolymère étant supérieure à 25 %.

Le polymère PVDF utilisé dans le cadre de l'invention présente de préférence un indice de fluidité à chaud inférieur ou égal à 15 g / 10 min, avantageusement inférieur ou égal à 10 g / 10 min, et idéalement inférieur ou égal à 5 g / 10 min, selon la norme ISO 1133 (230°C, 12,5 kg), afin de garantir de bonnes propriétés de résistance mécanique.

Le copolymère VDF / HFP utilisé dans le cadre de l'invention est de préférence un élastomère, qui est défini par l'ASTM dans le Special Technical Publication n°184 comme étant un matériau pouvant être étiré à la température ambiante à deux fois sa longueur initiale et qui, une fois relâché, reprend rapidement sa longueur initiale, à 10 % près.

Le copolymère VDF / HFP est obtenu par copolymérisation de monomères VDF et de monomères HFP. Il a été constaté que les copolymères VDF / HFP sont thermoplastiques à de faibles teneurs en HFP, et sont élastomères à des teneurs élevées en HFP. Dans le cadre de l'invention, le taux ou proportion massique de monomères HFP est supérieure à 25 %.

Selon certains modes de réalisation, cette proportion massique de monomères HFP est supérieure ou égale à 26 %, ou à 27 %, ou à 28 %, ou à 29 %, ou à 30 % ou à 31 %, ou à 32 %, ou à 33 %, ou à 34 %, ou à 35 %, ou à 36 %, ou à 37 %, ou à 38 %, ou à 39%.

Selon certains modes de réalisation, cette proportion massique de monomères HFP est inférieure ou égale à 40%, ou à 39 %, ou à 38 %, ou à 37 %, ou à 36 %, ou à 35 %, ou à 34 %, ou à 33 %, ou à 32 %, ou à 31 %, ou à 30 %, ou à 29 %, ou à 28 %, ou à 27 %, ou à 26 %.

La proportion massique de HFP dans le copolymère est de préférence déterminée par résonance magnétique nucléaire. On peut notamment utiliser la méthode de RMN ¹⁹F suivante.

Les échantillons de copolymère sont dissous dans un tube pour RMN de 5 mm de diamètre. Les échantillons de copolymère contenant plus de 10 % en poids de HFP sont dissous dans de l'acétone-d6 à 55°C. Une quantité de copolymère (environ 10 mg) est placée dans un tube et on ajoute du solvant pour remplir 5,5 cm de tube (environ 0,75 mL de solvant). On utilise un bloc chauffant pour porter les échantillons à la température souhaitée. Les échantillons sont chauffés pendant au moins une heure jusqu'à dissolution du solide et disparition du gel. Les tubes sont retournés pour vérifier l'absence de gel.

Les spectres sont acquis sur un spectromètre type Bruker DMX ou Varian Mercury 300 opéré à 55°C dans le cas du solvant acétone-d6 et sont analysés selon la méthode décrite dans « Composition and sequence distribution of vinylidene fluoride copolymer and terpolymer fluoroelastomers. Determination by 19F NMR spectroscopy and correlation with some properties ». M. Pianca et al, Polymer, 1987, vol.28, 224-230. L'exactitude des mesures est vérifiée en mesurant les intégrales de CF₃ et de CF et en les comparant pour voir si elles sont bien dans un rapport de 3 sur 1.

De préférence, le copolymère utilisé pour la préparation de la composition destinée à former le composé polymérique fluoré de la structure tubulaire flexible est essentiellement dépourvu d'homopolymère.

Le copolymère peut être fabriqué par le procédé décrit dans la publication de M. Pianca et al précitée.

Les plastifiants au sens de l'invention sont les composés définis dans l'ouvrage Encyclopedia of Polymer Science and Engineering, édité par Wiley & Sons (1989), p.568-569 et p.588-593. Ils peuvent être monomériques ou polymériques. On peut notamment citer le sébaçate de dibutyle, le phtalate de dioctyle, le N-n-butylsulfonamide, les polyesters polymériques et les combinaisons de ceux-ci. Les polyesters polymériques appropriés sont notamment ceux dérivés des acides adipique, azélaïque ou sébacique et des diols, et les combinaisons de ceux-ci, la masse moléculaire étant de préférence supérieure ou égale à 1500, plus particulièrement supérieure ou égale à 1800, et de préférence inférieure ou égale à 5000, et plus particulièrement inférieure ou égale à 2500. Des plastifiants de masse moléculaire excessive aboutiraient à une composition présentant une résistance à l'impact trop faible.

Le sébaçate de dibutyle constitue un plastifiant particulièrement avantageux.

La présence du plastifiant facilite la fabrication de la composition ou sa transformation pour fabriquer la couche de composé polymérique fluoré de la structure tubulaire flexible. Elle améliore également la tenue au choc du composé polymérique fluoré.

Outre le PVDF, copolymère et plastifiant, la composition du composé polymérique fluoré peut comprendre divers additifs et / ou charges et / ou particules électriquement conductrices et / ou pigments ou colorants minéraux ou organiques.

Parmi les charges possibles, on peut citer de manière non limitative le mica, l'alumine, le talc, le noir de carbone, les fibres de verre, les composés macromoléculaires et le carbonate de calcium ainsi que les charges d'oxydes métalliques choisis dans le groupe constitué du Fe₂O₃, PbO, ZnO, NiO, CoO, CdO, CuO, SnO₂, MoO₃, Fe₃O₄, Ag₂O, CrO₂, CrO₃, Cr₂O₃, TiO, TiO₂ et Ti₂O₃, les oxydes alcalins et alcalino-terreux choisis parmi le CaO, le Ca(OH)₂ et le MgO.

Parmi d'autres charges possibles, on peut citer de manière non limitative les stabilisants UV (de préférence à l'exception des agents de type IRGANOX®), les produits ignifuges, les stabilisants thermiques, les adjuvants de fabrication (de préférence à l'exception des polyoléfines et notamment des polymères à base d'éthylène).

Lorsqu'ils sont présents, les composés ci-dessus, distincts du PVDF, du copolymère et du plastifiant, sont présents à hauteur de 20 % au plus, de préférence de 15 % au plus, ou de 10 % au plus, ou de 7 % au plus, ou de 5 % au plus, ou de 3 % au plus, ou de 2 % au plus, ou de 1 % au plus (en proportion massique par rapport à la composition totale).

Selon un autre mode de réalisation de la structure tubulaire flexible de l'invention, une composition conduisant au composé polymérique fluoré consiste essentiellement en, le PVDF, copolymère et plastifiant, voire consiste en le PVDF, copolymère et plastifiant exclusivement.

La teneur massique en copolymère dans la composition est de 10 à 35 %, notamment de 20 à 35 %, et de préférence de 25 à 35 %.

Selon certains modes de réalisation, la teneur massique en copolymère dans la composition est supérieure ou égale à 11 %, ou à 12 %, ou à 13 %, ou à 14 %, ou à 15 %, ou à 16 %, ou à 17 %, ou à 18 %, ou à 19 %, ou à 20 %, ou à 21 %, ou à 22 %, ou à 23 %, ou à 24 %, ou à 25 %, ou à 26 %, ou à 27 %, ou à 28 %, ou à 29 %, ou à 30 %, ou à 31 %, ou à 32 %, ou à 33 %, ou à 34 %.

Selon certains modes de réalisation, la teneur massique en copolymère dans la composition est inférieure ou égale à 34 %, ou à 33 %, ou à 32 %, ou à 31 %, ou à 30 %, ou à 29 %, ou à 28 %, ou à 27 %, ou à 26 %, ou à 25 %, ou à 24 %, ou à 23 %, ou à 22 %, ou à 21 %, ou à 20 %, ou à 19 %, ou à 18 %, ou à 17 %, ou à 16 %, ou à 15 %, ou à 14 %, ou à 13 %, ou à 12 %, ou à 11 %.

La teneur massique en plastifiant dans la composition finale de la couche de composé polymérique fluoré de la structure tubulaire flexible est de préférence de 1 à 5 %, en particulier de 2 à 3,5 %. Une quantité excessive de plastifiant conduit à une variation volumique indésirable de la composition, par exsudation du plastifiant.

Le composé polymérique fluoré de la structure tubulaire flexible obtenu selon la composition précitée est testée au moyen du test de fatigue, qui est décrit dans le document WO 2010/026356. Il consiste à déterminer, pour un échantillon donné de composition polymérique, le nombre de cycles à rupture (noté NCR), c'est-à-dire le nombre de cycles au bout duquel se produit la rupture de l'échantillon. Plus la valeur de NCR est élevée, meilleur est le résultat du test de fatigue.

Afin de réaliser un test de fatigue, on découpe des éprouvettes axisymétriques dans l'épaisseur d'un tube extrudé, avec un rayon de courbure d'entaille de 4 mm et un rayon minimal de 2 mm. Ces éprouvettes sont considérées comme étant représentatives de la géométrie locale du tube. Le test est effectué au moyen d'un dynamomètre servohydraulique, par exemple de type MTS 810. La distance entre mors est de 10 mm. On impose à l'éprouvette un allongement maximum de 1,4 mm et un rapport entre l'allongement minimum et l'allongement maximum de 0,21, ce qui correspond à un allongement minimum de 0,3 mm, avec un signal sinusoïdal ayant une fréquence de 1 Hz. Le résultat du test (NCR) est la moyenne des résultats obtenus sur 10 éprouvettes.

Afin de réaliser un test de fluage à chaud, on effectue un essai de traction selon la norme ISO 527 (éprouvettes de type 1A à la vitesse de 50 mm/min) sur des éprouvettes non vieillies de la composition polymérique, avec un conditionnement de ces éprouvettes à la température de test de 130°C, 20 minutes avant l'essai. La contrainte au seuil de ces éprouvettes correspond à la contrainte nominale maximale supportée par les éprouvettes lors de la traction. Plus la contrainte est élevée, meilleure est la résistance au fluage de la composition polymérique.

### EXEMPLE

Des compositions sont préparées à partir des composés suivants :
- Kynar® 400 : PVDF homopolymère bimodal commercialisé par Arkema.
- Copolymère fluoré A : copolymère VDF-HFP (35% en poids d'HFP) ayant une viscosité en fondu de 3200 Pa.s sous 100 s⁻¹ à 230°C,
- Copolymère fluoré B : copolymère VDF-HFP (25% en poids d'HFP) ayant une viscosité en fondu de 1800 Pa.s sous 100 s⁻¹ à 230°C,
- Kynarflex® 2750 : copolymère VDF-HFP (15% en poids d'HFP) ayant une viscosité en fondu de 2250 Pa.s sous 100 s⁻¹ à 230°C, commercialisé par Arkema.
- DBS : sébaçate de dibutyle (plastifiant).

Cinq compositions sont testées, une formulation 1 et quatre à titre comparatif, formulations 2 à 5. Les performances des composés obtenus selon ces compositions sont mesurées, et notamment la tenue à la fatigue (selon le test NCR décrit ci-dessus, à la fois sur échantillons vieillis et non vieillis) et la tenue en fluage (selon le test décrit ci-dessus). Les résultats sont reportés dans le tableau ci-dessous. « ND » signifie que les mesures respectives n'ont pas été réalisées.

On constate que la formulation 1 présente des résultats exceptionnellement bons en tenue à la fatigue. La tenue en fluage est également excellente. D'autres tests, avec une mesure de température de transition ductile - fragile, ont également démontré les excellentes performances du composé polymérique fluoré.

La comparaison des exemples 1 et 2 montre que le choix du copolymère A permet d'obtenir de meilleurs résultats à l'état neuf et vieilli.

Lors du vieillissement de 30 jours à 150°C, il n'y a aucune évolution physico-chimique de la matrice PVDF ou du copolymère fluoré : l'effet du vieillissement n'a aucune incidence sur la masse moléculaire des composants ni sur la cristallinité de la matrice, qu'il s'agisse du taux ou de la morphologie cristalline. La seule évolution des matériaux constituant les exemples 1 et 2, induite par le vieillissement, est la perte du plastifiant après un maintien de 30 jours à 150°C dans l'air. Ainsi, la comparaison des résultats à l'état neuf et vieilli dans les exemples 1 et 2, permet de constater l'effet bénéfique de la présence du plastifiant (état neuf vs état vieilli), sur les propriétés de résistance à la fatigue.

Lorsque l'on compare les exemples 5 et 2, on observe que la formulation 5 sans plastifiant est moins résistante que la formulation 2 à l'état vieilli. Dans les deux cas (exemple 2 vieilli et exemple 5 état neuf), les matériaux ne possèdent pas (ou plus) de plastifiant. En outre, leur formulation est proche en termes de taux et de nature du copolymère utilisé. Cependant les propriétés à l'état neuf de l'exemple 5 sont nettement inférieures à celle de celles de l'exemple 2 à l'état vieilli : cette différence s'explique par le fait que dans le cas de l'exemple 5, on a observé la présences de défauts d'extrusion et de microfissures qui n'existent pas dans le cas de la formulation 2 (qui contenait du plastifiant à l'état initial) et la présence de ces microfissures affecte fortement la résistance en fatigue du matériau. En effet, il est connu de l'homme de l'art que la résistance à la fatigue des matériaux, quels qu'ils soient, est très dépendante de la présence plus ou moins importante de défauts dans le matériau. On notera que ce type de défaut ou de microfissure n'est observable dans aucune des autres formulations contenant du plastifiant : ainsi, cela démontre clairement un autre effet bénéfique essentiel du plastifiant, sur la résistance à la fatigue, à savoir la possibilité d'extruder des pièces épaisses (ayant une épaisseur d'au moins 3 mm) de qualité et sans défauts.

La comparaison des exemples 1 et 3 montre l'intérêt d'utiliser un taux de copolymère de type A, suffisamment important, le taux présent dans la formulation 3 étant nettement insuffisant.

Enfin, la comparaison des exemples 1, 2 avec l'exemple 4 montre l'intérêt d'utiliser un copolymère fluoré comportant un taux de comonomère suffisamment élevé pour produire une amélioration significative des propriétés en fatigue. Ainsi, dans la formulation 4, bien que le taux de copolymère soit proche de celui des exemples 1 et 2 et que cette formulation possède du plastifiant, elle possède une faible résistance à la fatigue.

**Tableau**

| **Formulation** | **Composition** (% en poids) | **NCR** (éprouvette R4 - 1Hz à - 10°C) **Non vieilli** | **NCR** (éprouvette R4 - 1Hz à - 10°C) **Vieilli 30 j à** 150°C dans l'air | **Tenue en fluage** contrainte seuil en traction à 130°C [MPa] |
|---|---|---|---|---|
| 1 (inv.) | 71 % Kynar®400 + 3% DBS + 26% copolymère fluoré A | > 146000 | 14800 | 9,1 |
| **2 (comp.)** | 68% Kynar®400 + 3% DBS + 29% copolymère fluoré B | 22100 | 3600 | 7,3 |
| **3 (comp.)** | 92% Kynar®400 + 3% DBS + 5% copolymère fluoré A | 1.000 | 200 | ND |
| **4 (comp.)** | 77% Kynar®400 + 3% DBS + 20% Kynarflex®2750 | 515 | ND | ND |
| **5 (comp.)** | 75% Kynar®400 +25% copolymère fluoré B | 300 | ND | 10 |

La composition selon la formulation 1, est la meilleure candidate pour former des couches de composé polymérique fluoré d'une structure tubulaire flexible destinée à l'exploitation pétrolière.

La présente invention concerne également une méthode de fabrication d'une structure tubulaire flexible conforme à l'invention. Pour ce faire, selon un premier mode de réalisation, on met en oeuvre une extrudeuse présentant une vis d'entraînement, laquelle comporte à l'une de ses extrémités une trémie de chargement et à l'autre de ses extrémités, une buse d'injection raccordée à une tête d'équerre apte à être traversée par un conduit. En reprenant, l'exemple de la conduite tubulaire flexible illustrée sur l'unique Figure, le conduit précité correspond alors à la carcasse. Elle est entraînée, de l'amont de la tête d'équerre vers son aval. La composition issue de la formulation 1 est conditionnée sous forme de granulés, lesquels sont introduits dans la trémie de chargement. Ils sont ensuite chauffés et ramollis à l'intérieur de la vis d'entraînement pour s'agréger et former une seule phase de la composition ramollie, laquelle est entraînée vers la tête d'équerre qui elle, est adaptée à former une couche cylindrique de la composition ramollie sur et autour de la carcasse.

Au-delà de l'aval de la tête d'équerre, la carcasse revêtue de la couche cylindrique de la composition ramollie est alors refroidie, soit à l'air, soit en traversant un bain d'eau. On obtient ainsi la gaine de pression faite d'un composé polymérique fluoré présentant les caractéristiques structurelles de la composition selon la formulation 1. Ensuite, et selon des étapes de réalisation bien connues, on enroule d'abord la voûte de pression formée d'un enroulement d'un fil de forme ou d'un feuillard en hélice à pas court, puis les armures de tension à pas long.

Ainsi, on réalise des conduites flexibles off-shore ou on-shore de transport d'hydrocarbures capables de supporter en fonctionnement une pression et une température élevée, typiquement jusqu'à 1000 bar et 130°C.

Le PVDF homopolymère, parfois utilisé seul pour les gaines de pression, se comporte bien à haute température mais présente l'inconvénient d'être peu ductile à basse température. Or, lors de la fabrication et de l'installation de la conduite, il est nécessaire que la gaine de pression puisse être fléchie à basse température (gelées hivernales, installation dans les zones froides...) sans s'endommager. C'est pourquoi le PVDF homopolymère seul n'est pas le mieux adapté à la réalisation des gaines de pression de conduite flexible.

Les conduites tubulaires flexibles visées sont principalement les conduites flexibles de type « unbonded ». Cependant, les structures tubulaires flexibles selon l'invention englobent également les conduites de type « bonded ».

Selon un autre mode de réalisation, on forme à partir de la composition selon la formulation 1, et par extrusion, des bandes longitudinales. Ces bandes de composé polymérique fluoré, sont utilisées dans les conduites flexibles pour diverses fonctions, notamment la protection contre l'usure et le frottement lorsqu'elles sont interposées entre les couches de renfort, de traction ou de pression. Elles sont également utilisées pour l'isolation thermique et la protection de composants sensibles à la température ou aux agressions chimiques, par exemple lorsqu'elles sont enroulées en spires jointives, précisément entre la carcasse et la gaine de pression.

La composition selon la formulation 1, est avantageusement mise en oeuvre dans les ombilicaux sous-marins définis dans la norme ISO 13628-5. Ces ombilicaux comportent au moins une couche de renfort et au moins une couche d'un composé polymérique fluoré et inclut généralement des faisceaux de conduits et notamment : des gaines de pression, des tubes de pression, des gaines externes ou bandes dans les conduites flexibles, des gaines ou bandes dans les câbles électriques ou à fibre optique, des tubes métalliques chemisé en interne ou en externe, des joncs de remplissage entre composants de l'ombilical, ou « *fillers* », des gaines intermédiaires ou externes ou encore des bandes entourant tout ou partie de l'assemblé de tubes et de câbles.

Selon encore un autre aspect, la présente invention concerne une structure tubulaire d'exploitation pétrolière, ladite structure tubulaire comprenant au moins un conduit, et au moins une couche d'un composé polymérique fluoré, ledit composé polymérique fluoré présentant une composition comprenant d'une part un homopolymère de polyfluorure de vinylidène et un copolymère de fluorure de vinylidène et d'un comonomère fluoré et d'autre part un plastifiant. La proportion massique en comonomère fluoré dans le copolymère est supérieure à 25 %.

Ainsi, l'invention concerne les conduites tubulaires, dénommées « *rigides* », utilisées en offshore. Elles sont du type de celles décrites dans la demande de brevet WO 03/062691 de la demanderesse. Elles comportent un tube en métal à l'intérieur duquel se trouve une couche polymérique ayant notamment pour fonction de protéger le tube métallique de la corrosion. Ces conduites tubulaires sont destinées à être installées en mer par les méthodes d'installation bien connues des hommes de l'art tel que la pose en J, la pose en S ou la technique de pose dite enroulé déroulé ou « reeled lay » en anglais. Cette dernière technique consiste à enrouler sur une roue motorisée d'un navire de pose une conduite tubulaire « rigide » préparée à terre en la déformant plastiquement avant de la transporter sur le lieu d'installation où elle est ensuite déroulée et redressée pour être installée sur le champs pétrolier.

### Abréviations

Les abréviations suivantes ont été utilisées dans la description et les revendications qui vont suivre :
VDF : fluorure de vinylidène
PVDF : polyfluorure de vinylidène
HFP : hexafluoropropylène
PMVE : perfluoro(méthylvinyl)éther
PEVE : perfluoro(éthylvinyl)éther
PPVE : perfluoro(propylvinyl)éther
PFBE : perfluorobutyléthylène
TFE : tétrafluoroéthylène
CTFE : Chrorotrifluoroethylène
FEP : Fluoroethylenpropylene
NCR : nombre moyen de cycles à rupture tel que mesuré par le test de fatigue

## Revendications

1. Structure tubulaire flexible d'exploitation pétrolière, ladite structure tubulaire flexible comprenant au moins une couche de renfort et au moins une couche d'un composé polymérique fluoré, ledit composé polymérique fluoré présentant une composition comprenant d'une part un homopolymère de polyfluorure de vinylidène et un copolymère de fluorure de vinylidène et d'un comonomère fluoré et d'autre part un plastifiant ;
**caractérisée en ce que** la proportion massique en comonomère fluoré dans le copolymère est supérieure à 25 % ;
et **en ce que** ledit copolymère de fluorure de vinylidène et dudit comonomère fluoré est un élastomère présent dans ladite composition selon une proportion massique de 10 à 35 %.

2. Structure tubulaire flexible selon la revendication 1, **caractérisée en ce que** ledit comonomère fluoré est l'hexafluoropropylène.

3. Structure tubulaire flexible selon la revendication 1 ou 2, **caractérisée en ce que** ledit copolymère de fluorure de vinylidène et dudit comonomère fluoré est présent dans ladite composition selon une proportion massique de 20 à 35 %, de préférence de 25 à 35 %.

4. Structure tubulaire flexible selon l'une quelconque des revendications 1 à 3, **caractérisée en ce que** ledit plastifiant est choisi parmi le sébaçate de dibutyle, le phtalate de dioctyle, le N-n-butylsulfonamide, les polyesters polymériques et les combinaisons de ceux-ci, et de préférence est du sébaçate de dibutyle.

5. Structure tubulaire flexible selon l'une quelconque des revendications 1 à 4, **caractérisée en ce que** ledit plastifiant est présent dans ladite composition selon une proportion massique de 1 à 5 %, de préférence de 2 à 3,5 %.

6. Structure tubulaire flexible selon l'une quelconque des revendications 1 à 5, **caractérisée en ce que** la proportion massique dudit comonomère fluoré dans ledit copolymère est : supérieure ou égale à 26 %, et / ou inférieure ou égale à 40 %, de préférence inférieure ou égale à 37%.

7. Structure tubulaire flexible selon l'une quelconque des revendications 1 à 6, **caractérisée en ce que** ledit composé polymérique fluoré présente une tenue à la fatigue à l'état non vieilli supérieure ou égale à 50000 cycles, de préférence supérieure ou égale à 100000 cycles en moyenne et / ou une tenue à la fatigue à l'état vieilli un mois à 150°C dans l'air supérieure ou égale à 5000 cycles, de préférence supérieure ou égale à 8000 cycles en moyenne.

8. Structure tubulaire flexible selon l'une quelconque des revendications 1 à 7, **caractérisée en ce que** ladite composition polymérique fluorée consiste en, ledit homopolymère de polyfluorure de vinylidène, ledit copolymère de fluorure de vinylidène et dudit comonomère fluoré et ledit plastifiant.

9. Structure tubulaire flexible selon l'une quelconque des revendications 1 à 8, **caractérisée en ce que** ladite couche dudit composé polymérique fluoré forme une gaine de pression, tandis que ladite couche de renfort comprend des profilés enroulés en hélice autour de ladite gaine de pression.

10. Structure tubulaire flexible selon l'une quelconque des revendications 1 à 8, **caractérisée en ce que** ladite couche dudit composé polymérique fluoré forme une gaine intermédiaire de protection.

11. Structure tubulaire flexible selon l'une quelconque des revendications 1 à 8, **caractérisée en ce que** ladite couche dudit composé polymérique fluoré est formée de bandes dudit composé polymérique fluoré enroulées en hélice.

12. Structure tubulaire flexible selon la revendication 11, **caractérisée en ce qu'**elle comprend deux couches de renfort, tandis que lesdites bandes de dudit composé polymérique fluoré sont enroulées en hélice entre lesdites deux couches de renfort.

13. Structure tubulaire flexible selon la revendication 11, **caractérisée en ce qu'**elle comprend une gaine de pression et une carcasse métallique située à l'intérieur de ladite gaine de pression, tandis que lesdites bandes dudit composé polymérique fluoré sont enroulées en hélice entre ladite carcasse et ladite gaine de pression.

14. Méthode de fabrication d'une structure tubulaire flexible d'exploitation pétrolière, ladite méthode étant du type selon laquelle, on fournit une composition comprenant d'une part un homopolymère de polyfluorure de vinylidène et un copolymère de fluorure de vinylidène et d'un comonomère fluoré et d'autre part un plastifiant, et on forme une couche de renfort et une couche dudit composé polymérique fluoré pour associer lesdites couches ;
**caractérisée en ce qu'**on fournit une composition dont la proportion massique dudit comonomère fluoré dans le copolymère est supérieure à 25 %, et dont ledit copolymère de fluorure de vinylidène et dudit comonomère fluoré est un élastomère présent dans ladite composition selon une proportion massique de 10 à 35 %.

## Patentansprüche

1. Flexible rohrförmige Struktur zur Erdölförderung, wobei die flexible rohrförmige Struktur mindestens eine Verstärkungsschicht und mindestens eine Schicht aus einer fluorierten Polymerverbindung umfasst, wobei die fluorierte Polymerverbindung eine Zusammensetzung aufweist, die einerseits ein Homopolymer von Polyvinylidenfluorid und ein Copolymer von Vinylidenfluorid und von einem fluorierten Comonomer und andererseits einen Weichmacher enthält; **dadurch gekennzeichnet, dass** der Massenanteil an fluoriertem Comonomer in dem Copolymer größer als 25 % ist und dass das Copolymer von Vinylidenfluorid und von dem fluorierten Comonomer ein Elastomer ist, das in der Zusammensetzung in einem Massenanteil von 10 bis 35 % vorhanden ist.

2. Flexible rohrförmige Struktur nach Anspruch 1, **dadurch gekennzeichnet, dass** das fluorierte Comonomer ein Hexafluorpropylen ist.

3. Flexible rohrförmige Struktur nach Anspruch 1 oder 2, **dadurch gekennzeichnet, dass** das Copolymer von Vinylidenfluorid und von dem fluorierten Comonomer in der Zusammensetzung in einem Massenanteil von 20 bis 35 %, vorzugsweise von 25 bis 35 %, vorhanden ist.

4. Flexible rohrförmige Struktur nach einem der Ansprüche 1 bis 3, **dadurch gekennzeichnet, dass** der Weichmacher ausgewählt ist aus Dibutylsebacat, Dioctylphtalat, N-n-Butylsulfonamid, den Polymerpolyestern und den Kombinationen davon, und vorzugsweise Dibutylsebacat ist.

5. Flexible rohrförmige Struktur nach einem der Ansprüche 1 bis 4, **dadurch gekennzeichnet, dass** der Weichmacher in der Zusammensetzung in einem Massenanteil von 1 bis 5 %, vorzugsweise von 2 bis 3,5 %, vorhanden ist.

6. Flexible rohrförmige Struktur nach einem der Ansprüche 1 bis 5, **dadurch gekennzeichnet, dass** der Massenanteil des fluorierten Comonomers in dem Copolymer größer oder gleich 26 % und/oder kleiner oder gleich 40 %, vorzugsweise kleiner oder gleich 37 % , ist.

7. Flexible rohrförmige Struktur nach einem der Ansprüche 1 bis 6, **dadurch gekennzeichnet, dass** die fluorierte Polymerverbindung eine Festigkeit gegenüber der Ermüdung im nicht gealterten Zustand von größer oder gleich 50.000 Zyklen, vorzugsweise größer oder gleich 100.000 Zyklen im Durchschnitt, aufweist, und/oder eine Festigkeit gegenüber der Ermüdung im an der Luft bei 150 ° C einen Monat lang gealterten Zustand von größer oder gleich 5.000 Zyklen, vorzugsweise größer oder gleich 8.000 Zyklen im Durchschnitt, aufweist.

8. Flexible rohrförmige Struktur nach einem der Ansprüche 1 bis 7, **dadurch gekennzeichnet, dass** die fluorierte Polymerzusammensetzung aus dem Homopolymer von Polyvinylidenfluorid, dem Copolymer von Vinylidenfluorid und dem fluorierten Comonomer und dem Weichmacher besteht.

9. Flexible rohrförmige Struktur nach einem der Ansprüche 1 bis 8, **dadurch gekennzeichnet, dass** die Schicht aus der fluorierten Polymerverbindung eine Druckhülle bildet, während die Verstärkungsschicht spiralförmig um die Druckhülle herum gewickelte Profile umfasst.

10. Flexible rohrförmige Struktur nach einem der Ansprüche 1 bis 8, **dadurch gekennzeichnet, dass** die Schicht aus der fluorierten Polymerverbindung eine Schutzzwischenhülle bildet.

11. Flexible rohrförmige Struktur nach einem der Ansprüche 1 bis 8, **dadurch gekennzeichnet, dass** die Schicht aus der fluorierten Polymerverbindung von Streifen aus der fluorierten Polymerverbindung gebildet ist, die spiralförmig gewickelt sind.

12. Flexible rohrförmige Struktur nach Anspruch 11, **dadurch gekennzeichnet, dass** sie zwei Verstärkungsschichten umfasst, während die Streifen aus der fluorierten Polymerverbindung spiralförmig zwischen den zwei Verstärkungsschichten gewickelt sind.

13. Flexible rohrförmige Struktur nach Anspruch 11, **dadurch gekennzeichnet, dass** sie eine Druckhülle und ein Metallgehäuse umfasst, das sich im Innern der Druckhülle befindet, während die Streifen aus der fluorierten Polymerverbindung spiralförmig zwischen dem Gehäuse und der Druckhülle gewickelt sind.

14. Verfahren zum Herstellen einer flexiblen rohrförmigen Struktur zur Erdölförderung, wobei das Verfahren von dem Typ ist, wonach: eine Zusammensetzung bereitgestellt wird, die einerseits ein Homopolymer von Polyvinylidenfluorid und ein Copolymer von Vinylidenfluorid und von einem fluorierten Comonomer und andererseits einen Weichmacher enthält;
und eine Verstärkungsschicht und eine Schicht aus der fluorierten Polymerverbindung gebildet wird, um die Schichten zu verbinden,
**dadurch gekennzeichnet, dass** eine Zusammensetzung bereitgestellt wird, bei welcher der Massenanteil an fluoriertem Comonomer in dem Copolymer größer als 25 % ist; und bei der das Copolymer von Vinylidenfluorid und von dem fluorierten Comonomer ein Elastomer ist, das in der Zusammensetzung in einem Massenanteil von 10 bis 35 % vorhanden ist.

## Claims

1. An oil exploration flexible tubular structure, said flexible tubular structure comprising at least one reinforcing layer and at least one layer of a fluorinated polymeric compound, said fluorinated polymeric compound having a composition comprising firstly a polyvinylidene fluoride homopolymer and a copolymer of vinylidene fluoride and of a fluorinated comonomer and secondly a plasticiser;
**characterised in that** the mass proportion of fluorinated comonomer in the copolymer is greater than 25%;
and **in that** said copolymer of vinylidene fluoride and said fluorinated comonomer is an elastomer present in said composition in a mass proportion of 10 to 35%.

2. The flexible tubular structure according to claim 1, **characterised in that** said fluorinated comonomer is hexafluoropropylene.

3. The flexible tubular structure according to claim 1 or 2, **characterised in that** said copolymer of vinylidene fluoride and of said fluorinated comonomer is present in said composition in a mass proportion of 20 to 35%, preferably of 25 to 35%.

4. The flexible tubular structure according to any one of claims 1 to 3, **characterised in that** said plasticiser is chosen from dibutyl sebacate, dioctyl phthalate, N-n-butylsulfonamide, polymeric polyesters and the combinations thereof, and is preferably dibutyl sebacate.

5. The flexible tubular structure according to any one of claims 1 to 4, **characterised in that** said plasticiser is present in said composition in a mass proportion of 1 to 5%, preferably of 2 to 3.5%.

6. The flexible tubular structure according to any one of claims 1 to 5, **characterised in that** the mass proportion of said fluorinated comonomer in said copolymer is: greater than or equal to 26%, and/or less than or equal to 40%, preferably less than or equal to 37%.

7. The flexible tubular structure according to any one of claims 1 to 6, **characterised in that** said fluorinated polymeric compound exhibits a fatigue limit in the unaged state greater than or equal to 50000 cycles, preferably greater than or equal to 100000 cycles on average and/or a fatigue limit at one month of age at 150°C in air greater than or equal to 5000 cycles, preferably greater than or equal to 8000 cycles on average.

8. The flexible tubular structure according to any one of claims 1 to 7, **characterised in that** said fluorinated polymeric composition consists of said polyvinylidene fluoride homopolymer, said copolymer of vinylidene fluoride and of said fluorinated comonomer, and said plasticiser.

9. The flexible tubular structure according to any one of claims 1 to 8, **characterised in that** said layer of said fluorinated polymeric compound forms a pressure sheath, whereas said reinforcing layer comprises profiles helically wound around said pressure sheath.

10. The flexible tubular structure according to any one of claims 1 to 8, **characterised in that** said layer of said fluorinated polymeric compound forms a protective intermediate sheath.

11. The flexible tubular structure according to any one of claims 1 to 8, **characterised in that** said layer of said fluorinated polymeric compound is formed of helically wound strips of said fluorinated polymeric compound.

12. The flexible tubular structure according to claim 11, **characterised in that** it comprises two reinforcing layers, whereas said strips of said fluorinated polymeric compound are helically wound between said two reinforcing layers.

13. The flexible tubular structure according to claim 11, **characterised in that** it comprises a pressure sheath and a metal frame situated inside said pressure sheath, whereas said strips of said fluorinated polymeric compound are helically wound between said frame and said pressure sheath.

14. A method of producing an oil exploration flexible tubular structure, said method being of the type according to which there is provided a composition comprising firstly a polyvinylidene fluoride homopolymer and a copolymer of vinylidene fluoride and of a fluorinated comonomer, and secondly a plasticiser, and there is formed a reinforcing layer and a layer of said fluorinated polymeric compound in order to link said layers; **characterised in that** a composition is provided, having a mass proportion of said fluorinated comonomer in the copolymer greater than 25%, and wherein said copolymer of vinylidene fluoride and of said fluorinated comonomer is an elastomer present in said composition in a mass proportion of 10 to 35%.
